# EUROPÄISCHE PATENTSCHRIFT

(11) **EP 0 622 545 B1**
(45) Veröffentlichungstag und Bekanntmachung des Hinweises auf die Patenterteilung: **30.07.1997**
(21) Anmeldenummer: 94102384.8
(22) Anmeldetag: 17.02.1994
(51) Int. Cl.: F04C 2/18, F16C 25/04

(54) **Verfahren und Lager zur Gleitabstützung einer Zahnradpumpen-Rotorwelle**
Method and bearing for frictional support at the rotor shaft of a gear pump
Procédé et palier de support glissant pour l'arbre de rotor d'une pompe à engrenages

(43) Veröffentlichungstag der Anmeldung: 02.11.1994
(73) Patentinhaber: Maag Pump Systems AG, CH-8023 Zürich (CH)
(72) Erfinder: Blume, Peter, Dr. techn., CH-8051 Zürich (CH); Stehr, Roger, Dr.-Ing., CH-8180 Bülach (CH)
(74) Vertreter: Troesch Scheidegger Werner AG

(56) Entgegenhaltungen:
- DE-A- 1 909 122
- FR-A- 375 854
- GB-A- 2 180 888
- US-A- 2 042 783
- US-A- 4 336 213

## Beschreibung

Die vorliegende Erfindung betrifft eine Zahnradpumpe nach dem Oberbegriff von Anspruch 1 sowie ein Verfahren nach demjenigen von Anspruch 8.

### Definition:

Als "Gleit-Abstützung" einer Welle wird, als Oberbegriff, deren Gleitlagerung und die Erstellung einer Dichtung zwischen Welle und Gehäuse mittels entsprechender Ausbildung des Zylinderraumes zwischen Welle und Gehäuse verstanden sowie die Kombination dieser Funktionen mit beliebiger Funktionsgewichtung.

Zahnradpumpen mit gleitabgestützten Rotorwellen der genannten Art sind bekannt.

Bei gleitgelagerten Wellen ist es üblich, zwischen dem druckbeaufschlagten Pumpenraum, worin die Zahnräder der Rotoren umlaufen, und den Gleitlagern Fliesswege vorzusehen, entlang welcher als Schmiermedium eingesetztes Fördermedium vom genannten Pumpenraum zu und entlang den Gleitlagerflächen gepresst wird. Unter diese Kategorie von Zahnradpumpen gehören auch solche, welche anschliessend an die Gleitlager-Gleit-Wellendichtungen im obgenannten Sinne, insbesondere genutete Wellendichtungen aufweisen, wie aus der US 4 336 213, der DE 41 25 128 oder der EP 0 558 888 bekannt. Dabei bildet die Nutung grundsätzlich eine Labyrinthdichtung und ist mit koaxial in sich geschlossenen Nutungsmustern ausgelegt oder, helixförmig, mit zusätzlicher Förderwirkung auf das als Schmiermedium eingesetzte Fördermedium.

Solche Zahnradpumpen weisen bezüglich der Gleitabstützung folgende Nachteile auf:
- Zum Ausbau der Wellendichtung müssen die mit der Welle verbundenen Kupplungsteile, beispielsweise für Antriebsgetriebe oder Motoren, abgebaut werden, sofern es sich bei einer derart gelagerten Welle um eine nach aussen geführte handelt;
- Insbesondere ist das Spiel zwischen Abstützfläche an der Welle und Abstützfläche gehäuseseitig fix vorgegeben;
- Bei genuteten Abstützflächen ergibt sich, wegen des fix vorgegebenen Spieles, dass nur für einen relativ engen Viskositätsbereich des Förder- bzw. Schmiermediums optimale Dichtwirkung erzielbar ist;
- Wellenversatz in Radialrichtung, wie bei deren Biegebeanspruchung möglich, bleibt unberücksichtigt, insbesondere was Dichtwirkung anbelangt.

Es ist Aufgabe der vorliegenden Erfindung, eine Zahradpumpe eingangs genannter Art zu schaffen, welche die genannten Nachteile behebt, bzw. ein entsprechendes Abstützverfahren.

Die genannte Aufgabe wird durch Ausbildung der eingangs erwähnten Zahnradpumpe nach dem kennzeichnenden Teil von Anspruch 1 gelöst.

Dadurch, dass nämlich die Abstützfläche - ob genutet oder nicht - gehäuseseitig durch mindestens zwei je Zylinderflächensegmente als Abstützflächensegmente festlegende Schalen gebildet ist, wird grundsätzlich die Möglichkeit geschaffen, radial das Spiel zwischen gehäuseseitiger Abstützfläche und Abstützfläche an der Welle auch nach Zusammenbau der Pumpe zu beinflussen.

Bei einer bevorzugten Ausführungsvariante der erwähnten Zahnradpumpe nach dem Wortlaut von Anspruch 2 wird der Azimutalabstand an mindestens einem sich gegenüberliegenden Paar axial und radial verlaufender Kantenflächen der Schalen einstellbar ausgebildet, sei dies durch Feststellorgane einstellbar oder sich selbsttätig einstellend aufgrund von Abstützreaktionskräften.

Bei einer bevorzugten Ausführungsvariante sind dabei die Abstützschalen federnd gegeneinander vorgespannt, und es sind, weiter bevorzugterweise, insbesondere bei selbsttätiger Einstellbarkeit Begrenzungsorgane, vorzugsweise einstellbare, für den maximalen Abstandshub vorgesehen, d.h. für das Mass, mit dem sich mindestens ein Paar aneinanderliegender Schalenkantenflächen ausspreizen kann.

Obwohl es durchaus möglich ist, alle vorgesehenen Kantenflächenpaare gleich auszubilden, womit eine im wesentlichen zentralsymmetrische Aufweitung des gehäuseseitigen Abstützzylinders möglich ist, selbsttätig oder einstellbar, ist bei einer weiteren bevorzugten Ausführungsvariante, dem Wortlaut von Anspruch 3 folgend, ein solches Paar scharnierartig verbunden, um ein zangenartiges Aufbiegen bzw. Rückschwenken der Schalen relativ zueinander zu ermöglichen.

In der Kombination mit der im Zusammenhang mit Anspruch 1 erörterten Variante ergibt sich beispielsweise bei Betrachtung der bevorzugten Ausführungsform mit zwei Schalen eine zangenartige Schwenkbarkeit der beiden Schalen, wobei das Abstandsverhältnis am Kantenflächenpaar, welches dem scharnierartig ausgebildeten gegenüberliegt, gemäss den erörterten Verhältnissen nach Anspruch 2 erfolgt.

Dadurch, dass gemäss Wortlaut von Anspruch 4 die Schalen in Richtung gegen den Pumpenraum hin, also axial, gegen eine im wesentlichen radial gerichtete Gehäusefläche gespannt sind, vorzugsweise federgespannt sind, wird die Möglichkeit geschaffen, einerseits durch Reibschluss an der genannten Fläche die Schalen zu fixieren und sie, nach Entspannung, einfach auswechseln zu können. Vorzugsweise erfolgt das genannte axiale Spannen mittels Federn, welche vorzugsweise einerseits an Schalen - nicht zwingend an allen -, andererseits am Gehäuse angreifen und welche zur Einstellung des dichtenden Reibschlusses bevorzugterweise einstellbar sind.

Bei einer weiter bevorzugten Ausführungsvariante, bei welcher sich die erfindungsgemässen Massnahmen besonders vorteilhaft erweisen, insbesondere bezüglich Dichtwirkung, weisen die Schalen und/oder die Abstützflächen wellenseitig eine durchlaufende Nutung auf.

Wenn, dem Wortlaut von Anspruch 6 folgend, die Welle nach aussen durchgeführt ist, kann der Leckagestrom des als Abstützmedium eingesetzten Fördermediums aussen abgeführt werden. Andernfalls mündet die Welle in einen Sammelraum im Gehäuse, wo die erwähnte Leckage aufgefangen und weggeführt oder rückgeführt wird.

Die erfindungsgemässe Zahnradpumpe eignet sich vornehmlich für die Förderung von Oelen, Kunststoffschmelzen und Kautschuk; dies insbesondere ausgebildet mit genuteter Wellendichtung.

Das erfindungsgemässe Verfahren zeichnet sich nach dem Wortlaut von Anspruch 8 aus.

Die Erfindung wird anschliessend beispielsweise anhand von Figuren erläutert.

Es zeigen:
- Fig. 1: einen vereinfachten Axialschnitt durch einen erfindungsgemäss abgestützten, hier gedichteten Zahnradpumpenrotor mit nach aussen durchgeführter Welle,
- Fig. 2: eine schematische Aufsicht auf die Anordnung gemäss Fig. 1,
- Fig. 3: eine vergrösserte Teildarstellung einer Azimutalspannvorrichtung, wie sie an der Anordnung gemäss den Fig. 1 und 2 vorgesehen ist,
- Fig. 4: perspektivisch und schematisch die Ausbildung eines erfindungsgemässen Abstütz-, hier Dichtabschnittes, insbesondere zur Erläuterung der scharnierartigen Verkopplung der vorgesehenen zwei Abstützschalen,
- Fig. 5: das Detail einer weiteren Möglichkeit der scharnierartigen Verkopplung gemäss Fig. 4.

Im folgenden wird eine erfindungsgemässe Zahnradpumpe beschrieben, bei welcher nebst einem konventionellen Gleitlagerabschnitt ein genuteter Dichtabschnitt vorgesehen ist.

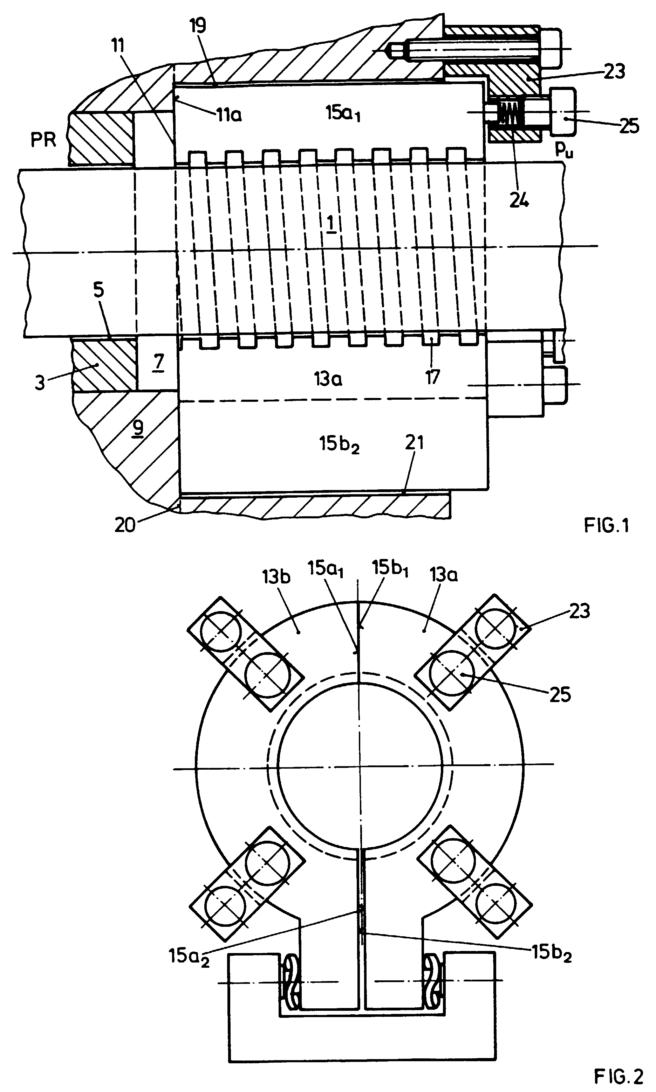

In Fig. 1 ist die Welle 1 eines Rotors (nicht dargestellt) einer Zahnradpumpe dargestellt, welche pumpenraumseitig PR, entsprechend der Darstellung von Fig. 1 links, in einem herkömmlichen Gleitlager mit gehäuseseitigem Lagerzylinder 3 gelagert ist. Aufgrund der Fliesswege 5 im herkömmlichen Gleitlager besteht in einem anschliessend an die Lagerzylinder 3 vorgesehenen ringförmigen Raum 7 gegenüber dem Umgebungsdruck p_{U} ein Ueberdruck. Der Ringraum 7 ist einerseits durch die nach aussen weisende Stirnfläche des Lagerzylinders 3, andererseits durch die Welle 1, das Pumpengehäuse 9 sowie durch die pumpraumseitig im wesentlichen radial gerichtete Ringfläche 11 von zwei Abstützschalen 13a, b gebildet, wovon die eine, 13a, in Fig. 1 dargestellt ist. Die zwei vorgesehenen Dichtschalen, als Spezialfall erfindungsgemäss ausgebildeter Abstützschalen sind, wie beispielsweise aus Fig. 2 ersichtlich, zylindersegmentförmig ausgebildet und weisen sich paarweise gegenüberliegende, axial und radial verlaufende Kantenflächen 15a₁/15b₁, 15a₂/15b₂ auf.

Die Schalen 13a, b weisen eine Nutung 17 auf, welche kontinuierlich an der durch beide Schalen 13a, b definierten Hohlzylinderwandung umlaufen. Die genähert einen Hohlzylinder definierenden Schalen 13a, b liegen in einem Radialspiel definierenden Zylinderraum 19, welcher in das Gehäuse 9 eingearbeitet ist. Wie gestrichelt bei 20 dargestellt, kann hierbei das Gehäuse durchaus mehrteilig ausgebildet sein. Die Schalen 13a, b liegen mit plangeschliffenen, gegen den Pumpenraum PR gerichteten, radialen Stirnflächen 11 bzw. Stirnflächenabschnitten 11a an ebenso plangeschliffenen Flächen 9a des Gehäuses 9 an und werden, wie noch zu beschreiben sein wird, gegen diese Flächen so gespannt, dass zwischen dem druckbeaufschlagten Ringraum 7 und Spielspalt 21 Dichtheit gewährleistet ist.

In der bevorzugten dargestellten Ausführungsform werden die Schalen 13a, b einstellbar gegen die Ringflächen 9a des Gehäuses 9 gespannt, vorzugsweise mittels Federelementen. Hierzu sind, wie auch aus Fig. 2 ersichtlich, Spannblöcke 23, beispielsweise vier, paarweise an den Backen 13a, 13b verteilt, einerseits am Gehäuse 9 fix verankert, beispielsweise damit verschraubt, und wirken andererseits über Federn 24 axial auf die Schalen 13. Mittels Einstellschrauben 25 werden die Federn 24 gespannt und damit der Presssitz der Flächen 11a und 9a eingestellt. Dieser Presssitz an den genannten Flächen, welche gegebenenfalls auch profiliert sein können, sichert auch - mindestens wenn profiliert - Drehstarrheit der Backen 13a, b während des Pumpenbetriebes.

Grundsätzlich ist der durch die Schalen 13a, b aufgespannte Innenraum bezüglich seiner Querschnittsfläche bzw. seines Umfanges einstellbar durch manuell einstellbare Organe und/oder selbsttätig aufgrund von Abstützkräften, hier entlang des genuteten Abschnittes.

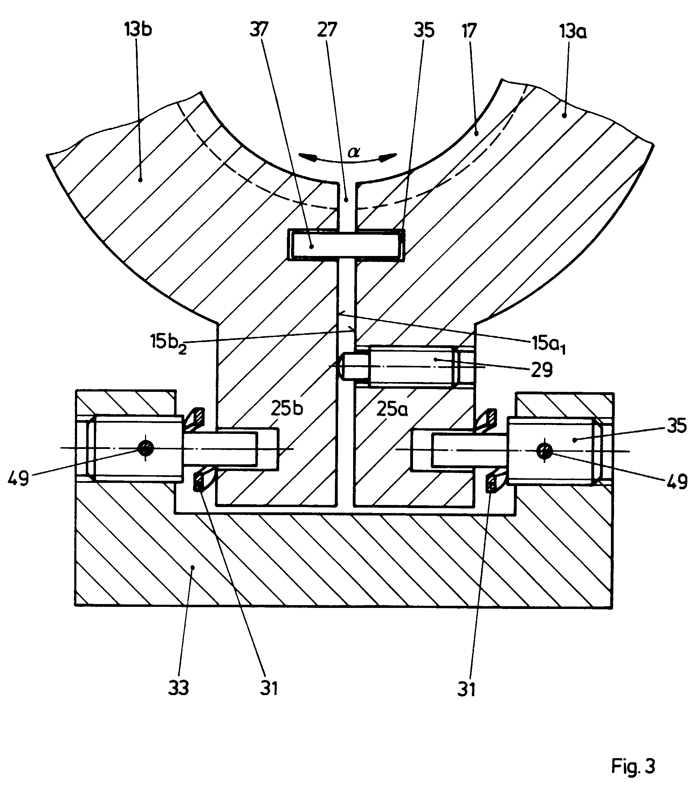

Wie in Fig. 2 schematisch dargestellt, ist hierzu ein Paar aneinanderliegender Kantenflächen 15a₁, 15b₁ scharnierähnlich verkoppelt, während das andere Stirnflächenpaar 15a₂/15b₂ sich zangenähnlich öffnen kann und, wie anhand von Fig. 3 detaillierter beschrieben wird, gekoppelt ist.

Aus Fig. 3, welche ausschnittsweise einen Querschnitt durch die Schalen 13a und 13b mit der Nutung 17 darstellt, und zwar im Bereiche der Kantenflächen 15a₂/15b₂ gemäss Fig. 2, ist ersichtlich, dass die beiden Schalen je einen radial nach aussen vorragenden Spannkragen 25a bzw. b aufweisen. Der minimale azimutale Spaltabstand in dem zwischen den Kantenflächen 15 aufgespannten Spalt 27 wird mittels eines Stellstiftes 29 eingestellt. Gegen die Kraft von Druckfedern 31 können sich die Spannkragen und damit die beiden Schalen 13a, b, wie mit α dargestellt, aufspreizen, welche Federn 31 einerseits an den erwähnten Spannkragen abgestützt, andererseits an einem Spannblock 33 widergelagert sind. Mit Hilfe von Spannschrauben 35 wird die Vorspannung der Federn 31 eingestellt. Der maximale Spreizhub αₘₐₓ wird dabei durch die Blockwirkung der Federn 31 selbst begrenzt.

Mittels eines dicht in Reibkontakt in entsprechenden Nuten 35 in den Schalenkantenflächen laufenden Dichtbandes 37 wird der Spalt 27 gedichtet, unabhängig vom Spreizwinkel α.

Wie erwähnt wurde, beschreibt das Ausführungsbeispiel gemäss den Fig. 1 bis 5 eine Zahnradpumpe mit konventionellem Gleitlager und gegen aussen anschliessender genuteter Wellendichtung, welche aber im Sinne oben erwähnter Definition ebenfalls als Abstützung bezeichnet wird. In anderen Ausführungsvarianten kann ein erfindungsgemäss ausgebildetes Gleitlager vorgesehen sein.

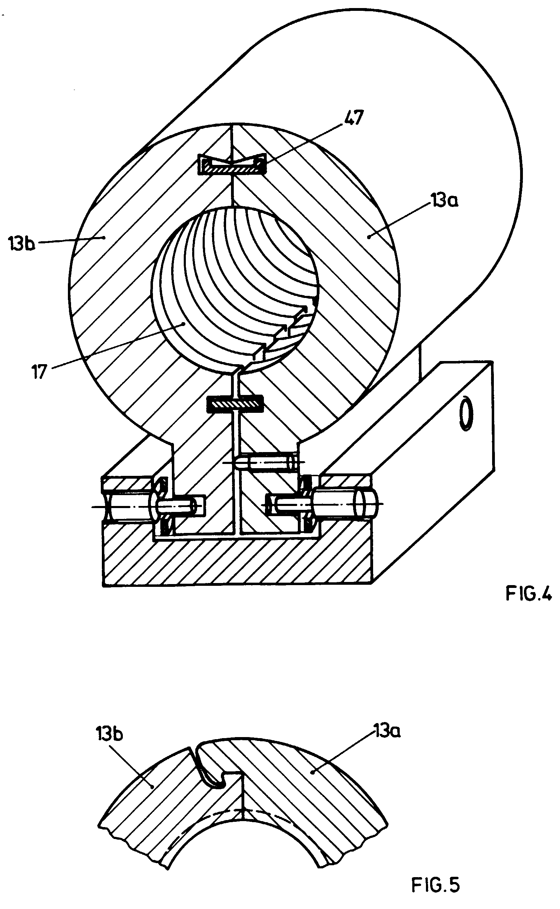

In Fig. 4 ist insbesondere ersichtlich, wie mit einem Band 47 die Kantenflächen 15a₁/15b₁ der Schalen scharnierartig verbunden sind; in Fig. 5 ist eine alternative Verbindung mit überhakenden Partien dargestellt. Somit wirken die Schalen entlang der Kantenflächen 15a₁, 15b₁, in Grenzen, wie ein Scharnier. Am zweiten Kantenflächenpaar entsprechend Fig. 3 wird der Maximalspreizhub festgelegt, so dass sich ein Abstützspiel von selbst, aber gegen Federvorspannung einstellen kann. Durch Verankerung des Blockes 33, beispielsweise mittels Schraubankern 49 wird, zusätzlich zum Reibschluss an den Flächen 11a, 9a, eine Verdrehsicherung der Schalen 13a, 13b sichergestellt. Die Abdichtung des die radiale Beweglichkeit der Schalen zulassenden zylinderförmigen Raumes 21 gemäss Fig. 1 gegen den druckbeaufschlagten, pumpenraumseitigen Raum 7 hin wird dadurch gewährleistet, dass die Flächen 11a, 9a plangeschliffen und federnd gegeneinander gespannt sind.

Durch die erfindungsgemässe Konstruktion ergeben sich weiter die Vorteile, dass ein Anfressen zwischen Welle und erfindungsgemäss ausgebildeten gehäuseseitigen Abstützflächen kaum mehr möglich ist, da sich die gehäuseseitigen Abstützflächen im Bedarfsfall selbsttätig gegen Federwirkung aufspreizen können.

Kommt es zu einer durchbiegungsbedingten Schrägstellung der Welle 1 in einem vom momentanen Abstützspiel nicht mehr aufgenommenen Masse, dann können sich die Schalen 13a, b aufspreizen. Im weiteren kann je nach Viskosität des Förder- und Abstützmediums die Abstützwirkung bzw. Dichtwirkung angepasst werden, indem Dicht- und/oder Abstützspalt-Einstellung mittels des Bolzens 29 variiert wird.

Nach dem Entfernen der axialen Spannblöcke 23 und Lösen der Anker 49 können die Schalen 13a, b gemeinsam aus dem Gehäuse 9 ausgezogen werden und durch Entfernen der Vorspannschrauben 35 die Schalen dann getrennt werden.

## Patentansprüche

1. Zahnradpumpe mit zwei Rotoren, welche je ein in einem gemeinsamen Pumpenraum angeordnetes Zahnrad umfassen und mindestens einer der Rotoren, mindestens einseitig, eine bezüglich eines Gehäuses gleitabgestützte Welle (1) umfasst, wobei Fliesswege (5) für Fördermedium vom Pumpenraum zu und entlang der Abstützfläche (17) an der Welle (1) vorgesehen sind, dadurch gekennzeichnet, dass die Abstützfläche (17) gehäuseseitig (9) durch mindestens zwei je Zylinderflächensegmente als Abstützflächensegmente festlegende Schalen (13a, 13b) gebildet ist.

2. Zahnradpumpe nach Anspruch 1, dadurch gekennzeichnet, dass der Azimutalabstand an mindestens einem sich gegenüberliegenden Paar axial und radial verlaufender Kantenflächen (15a₂/15b₂) der Schalen (13a, 13b) einstellbar ist durch Feststellorgane (29) oder selbsttätig durch Abstützreaktionskräfte und vorzugsweise, dass die Schalen federnd (31) gegeneinander vorgespannt sind und vorzugsweise, bei selbsttätiger Einstellbarkeit, Begrenzungsorgane, vorzugsweise einstellbare (35, 31), für den maximalen Abstandshub vorgesehen sind.

3. Zahnradpumpe nach einem der Ansprüche 1 oder 2, dadurch gekennzeichnet, dass die Schalen im Bereich im wesentlichen axial und radial verlaufender, sich zugewandter Schalenkantenflächen (15a₁/15b₁) zangenartig relativ zueinander aufbiegbar (α), verbunden sind.

4. Zahnradpumpe nach einem der Ansprüche 1 - 3, dadurch gekennzeichnet, dass die Schalen in Richtung gegen den Pumpenraum gegen eine im wesentlichen radial gerichtete Gehäusefläche gespannt sind, vorzugsweise federgespannt (24) sind, vorzugsweise mittels einerseits an Schalen, anderseits am Gehäuse gelagerter Federspanneinrichtungen (23), vorzugsweise einstellbarer (25) Federspanneinrichtungen.

5. Zahnradpumpe nach einem der Ansprüche 1 - 4, dadurch gekennzeichnet, dass die Schalen und/oder die Welle eine durchlaufende Nutung (17) aufweisen.

6. Zahnradpumpe nach einem der Ansprüche 1 - 5, dadurch gekennzeichnet, dass die welle durch das Gehäuse durchgeführt ist oder in einen Sammelraum für Förder- bzw. Abstützmedium ausmündet.

7. Zahnradpumpe nach einem der Ansprüche 1 - 6 für Oele, Kunststoffschmelze, Kautschuk.

8. Verfahren zur Gleitabstützung einer Zahnradpumpen-Rotorwelle, dadurch gekennzeichnet, dass man den Spalt zwischen Welle und gehäuseseitigen Abstützflächen mechanisch einstellt, sei dies mittels, manuell verstellbaren Einstellorganen sei dies, dass die mechanisch Einstellung selbsttätig aufgrund momentaner Abstützkräfte erfolgt.

## Claims

1. A gear pump with two rotors which have each a gear placed in a common pump space and at least one of the rotors, at least on one side, has a shaft (1) supported by a slide mounting relative to a case, flowing paths (5) being provided on the shaft (1) for the conveyed medium from the pump space to supporting surface (17) and along the latter, characterised in that supporting surface (17) is formed on the side of the case (9) by at least two shells (13a, 13b) defining respective cylindrical surface segments as supporting surface segments.

2. The gear pump according to claim 1, characterised in that the azimuthal spacing of at least one pair of edge surfaces (15a₂/15b₂) of the shells (13a, 13b) extending axially and radially and facing each other is adjustable by means of locking members (29) or automatically by supporting reaction forces, and preferably in that the shells are spring (31) prestressed against each other and in the case of an automatic adjustment preferably adjustable (35, 31) limiting members are provided for the maximum spacing stroke.

3. The gear pump according to claim 1 or 2, characterised in that the shells are connected so that they can be swung open (α) relative to each other like nippers, in the region of shell edge surfaces (15a₁/15b₁) turned towards each other and extending substantially axially and radially.

4. The gear pump according to one of claims 1 to 3, characterised in that the shells are stressed towards the pump space against a case surface directed substantially radially, preferably by a spring (24) and preferably by means of spring tension devices (23) arranged on one side on the shells and on the other side on the case, and preferably by means of adjustable (25) spring tension devices.

5. The gear pump according to one of claims 1 to 4, characterised in that the shells and/or the shaft have a continuous grooving (17).

6. The gear pump according to one of claims 1 to 5, characterised in that the shaft leads through the case or runs into a collecting space for the conveyed or supporting medium.

7. The gear pump according to one of claims 1 to 6 for oils, plastic molten mass, rubber.

8. A method for glide supporting of a gear pump rotor shaft, characterised in that the gap between the shaft and the supporting surfaces provided on the side of the case is mechanically adjusted either by means of manually adjustable members or automatically with instantaneous supporting forces.

## Revendications

1. Pompe à engrenages comportant deux rotors qui comprennent chacun une roue dentée disposée dans un espace de pompe commun, et l'un au moins des rotors comprend, au moins d'un côté, un arbre (1) doté d'un montage à glissement par rapport à un carter, des voies d'écoulement (5) étant prévues au niveau de l'arbre (1) pour le produit acheminé, de l'espace de pompe vers la surface d'appui (17) et le long de celle-ci, caractérisée en ce que la surface d'appui (17) est formée, côté carter (9), par au moins deux coquilles (13a, 13b) qui déterminent chacune des segments de surface cylindrique comme segments de surface d'appui.

2. Pompe à engrenages selon la revendication 1, caractérisée en ce que l'écartement azimutal d'au moins une paire de surfaces d'arêtes (15a₂/15b₂) des coquilles (13a, 13b) qui s'étendent axialement et radialement l'une en face de l'autre est réglable grâce à des organes de blocage (29) ou automatiquement grâce à des forces de réaction d'appui, et de préférence en ce que les coquilles sont précontraintes par ressort (31) l'une contre l'autre et, dans le cas d'un réglage automatique, des organes de limitation de préférence réglables (35, 31) sont prévus de préférence, pour la course d'écartement maximale.

3. Pompe à engrenages selon la revendication 1 ou 2, caractérisée en ce que les coquilles sont reliées, aptes à s'ouvrir (α) l'une par rapport à l'autre à la manière d'une pince, dans la zone de surfaces d'arêtes de coquilles (15a₁/15b₁) tournées l'une vers l'autre et s'étendant globalement axialement et radialement.

4. Pompe à engrenages selon l'une des revendications 1 à 3, caractérisée en ce que les coquilles sont contraintes, de préférence par ressort (24), en direction de l'espace de pompe contre une surface de carter dirigée globalement radialement, de préférence à l'aide de dispositifs de contrainte par ressort (23) montés d'un côté sur les coquilles et de l'autre côté sur le carter, et de préférence à l'aide de dispositifs de contrainte par ressort réglables (25).

5. Pompe à engrenages selon l'une des revendications 1 à 4, caractérisée en ce que les coquilles et/ou l'arbre comportent un rainurage continu (17).

6. Pompe à engrenages selon l'une des revendications 1 à 5, caractérisée en ce que l'arbre traverse le carter et débouche dans un espace collecteur pour le produit acheminé ou d'appui.

7. Pompe à engrenages selon l'une des revendications 1 à 6 pour des huiles, des matières plastiques fondues, du caoutchouc.

8. Procédé pour l'appui à glissement d'un arbre de rotor de pompe à engrenages, caractérisé en ce qu'on règle mécaniquement l'interstice entre l'arbre et les surfaces d'appui situées côté carter, soit à l'aide d'organes de réglage aptes à être ajustés manuellement, soit automatiquement, grâce à des forces d'appui momentanées.
